# EUROPEAN PATENT SPECIFICATION

(11) **EP 1 813 374 B1**
(45) Date of publication and mention of the grant of the patent: **11.03.2009**
(21) Application number: 07101317.1
(22) Date of filing: 29.01.2007
(51) Int. Cl.: B23K 9/16, B23K 9/32, B23K 37/00, B23P 6/00, F01D 5/00, F01D 5/28, F04D 29/28, B23K 101/00

(54) **Gas welding shielding dam with a flange and a fastener for automated welding of impellers and blisks**
Gasschweißschirm mit einem Flansch und einem Befestigungsmittel für automatisches Schweißen von Laufrädern und Blisks
Barrière de guidage pour gas de soudage avec un flanc et un élément de fixation pour le soudage automatique de turbines et de grilles monobloc

(30) Priority: 30.01.2006 US 342779
(43) Date of publication of application: 01.08.2007
(73) Proprietor: Honeywell International Inc., Morristown NJ 07960 (US)
(72) Inventor: Beeson, William J., Laveen, AZ 85339 (US)
(74) Representative: Haley, Stephen

(56) References cited:
- JP-A- 9 164 497
- JP-A- 2001 205 445
- JP-A- 2002 254 176
- JP-A- 2005 040 815
- US-A- 2 553 899
- US-A- 6 109 843
- US-A1- 2007 095 797

## Description

The present invention relates to gas turbine engine repair tools, and, more particularly, to a dam for localising gas around an outer periphery of an impeller according to the preamble of claim 1 (see, for example, US-A-2 553 899).

A gas turbine engine may be used to power various types of vehicles and systems. A particular type of gas turbine engine that may be used to power an aircraft is a turbofan gas turbine engine. A turbofan gas turbine engine may include, for example, a fan section, a compressor section, a combustor section, a turbine section, and an exhaust section. The fan section is positioned at the front of the engine, and includes a fan that induces air from the surrounding environment into the engine and accelerates a fraction of this air toward the compressor section. The remaining fraction of induced air is accelerated into and through a bypass plenum, and out the exhaust section.

The compressor section is configured to raise the pressure of the air to a relatively high level. In particular, the compressor section includes an impeller that has a plurality of vanes extending therefrom that accelerate and compress the air. The compressed air then exits the compressor section, and is energized by the combustor section and flowed into the turbine section to cause rotationally mounted turbine vanes to rotate and generate energy.

Over time, certain components of the engine may become worn and may need to be replaced or repaired. For example, impeller vanes may become deformed or damaged due to prolonged exposure to high temperature air and continuous bombardment by particles during engine operation. Impeller vane repairs often employ welding processes, such as, for example, laser welding, tungsten inert gas welding, or plasma arc welding, where a power source is used to melt a filler material, and a sufficient amount of the melted material is deposited onto a desired area of the impeller. After the material cools and hardens, the area is machined into a desired configuration.

When the filler material is in a molten state, it is preferably isolated from contact with oxygen. Oxygen may oxidize or contaminate the filler material and cause it to become relatively brittle or weak. To prevent such contamination, the impeller is typically bathed in a noble gas, such as argon. The gas, which is typically heavier than air, is generally supplied through a weld head, spread through a metal screen either coupled or adjacent thereto, and poured directly onto the impeller.

Although the above-mentioned technique for bathing the impeller is adequate, it suffers from certain drawbacks. Specifically, because the impeller does not include portions that form enclosed cavities, the gas continuously spills off of the impeller and thus, needs to be continually supplied. As a result, a large amount of gas is used. Additionally, the gas may not sufficiently bathe certain portions of the impeller, and, consequently, the impeller may not be entirely covered in the gas. Thus, the likelihood of the filler material becoming oxidized increases.

Hence, there is a need for a dam that reduces the amount of gas used in a welding process. Additionally, it is desirable that the dam allow a repair area of the impeller to be entirely covered by the gas to reduce the likelihood that the filler material will become oxidized.

US-A-2553899 discloses a dam suitable localising gas around an outer periphery of an impeller. US-A-6109843 and JP-A-2002254176 disclose similar arrangements.

According to the present invention there is provided a dam for localizing gas around an outer periphery of an impeller according to claim 1.

Other independent features and advantages of the preferred mask will become apparent from the following detailed description, taken in conjunction with the accompanying drawings which illustrate, by way of example, the principles of the invention.

In the Drawings;
FIG. 1 is a partial cross section side view of a gas turbine engine with the major sections of the engine separated from one another;
FIG. 2 is a close up cross section side view the compressor, combustor and turbine sections of a gas turbine engine depicted in FIG. 1;
FIG. 3 is an exploded view of the compressor section depicted in FIG. 2;
FIG. 4 is a cross section view of an impeller according to the present invention including an exemplary dam mounted thereto during a step in a welding process;
FIG. 5 is a top view of a dam not being part of the present invention; and
FIG. 6 is a perspective view of the impeller and a portion of the dam shown in FIG. 4.

The following detailed description of the invention is merely exemplary in nature and is not intended to limit the invention or the application and uses of the invention. Furthermore, there is no intention to be bound by any theory presented in the preceding background of the invention or the following detailed description of the invention.

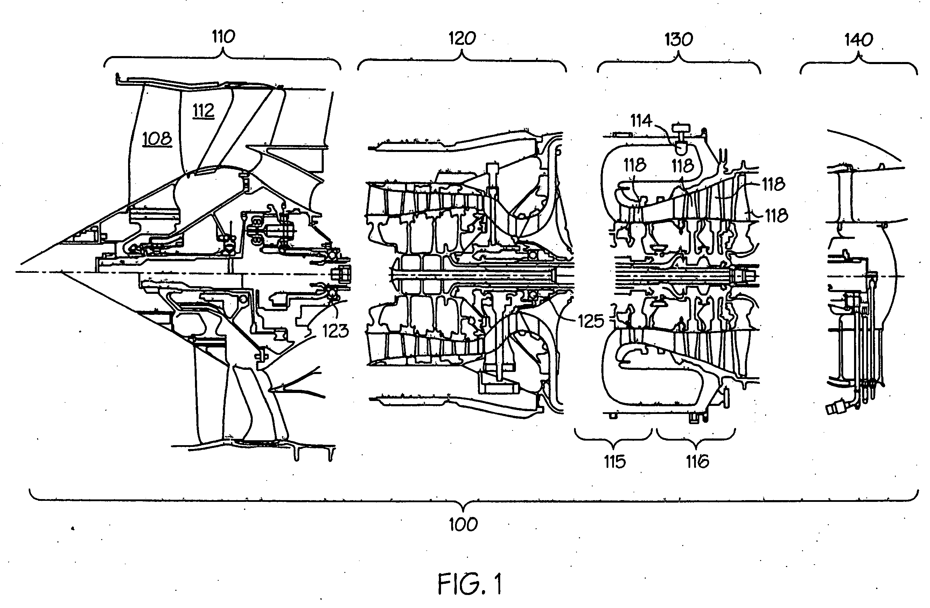

Turning now to the description, and with reference first to FIG. 1, a partial cross section side view of a turbofan jet engine 100, on which the novel mask 270 may be used, is depicted. The turbofan jet engine 100 includes a fan module 110, a compressor module 120, a combustor and turbine module 130 and an exhaust module 140. The fan module 110 is positioned at the front, or "inlet" section of the engine 100, and includes a fan 108 that induces air from the surrounding environment into the engine 100. The fan module 110 accelerates a fraction of this air toward the compressor module 120, and the remaining fraction is accelerated into and through a bypass 112, and out the exhaust module 140. The compressor module 120 raises the pressure of the air it receives to a relatively high level.

The high-pressure compressed air then enters the combustor and turbine module 130, where a ring of fuel nozzles 114 (only one illustrated) injects a steady stream of fuel. The injected fuel is ignited by a burner (not shown), which significantly increases the energy of the high-pressure compressed air. This high-energy compressed air then flows first into a high pressure turbine 115 and then a low pressure turbine 116, causing rotationally mounted turbine blades 118 on each turbine 115, 116 to turn and generate energy. The energy generated in the turbines 115, 116 is used to power other portions of the engine 100, such as the fan module 110 and the compressor module 120. The air exiting the combustor and turbine module 130 then leaves the engine 100 via the exhaust module 140. The energy remaining in the exhaust air aids the thrust generated by the air flowing through the bypass 112.

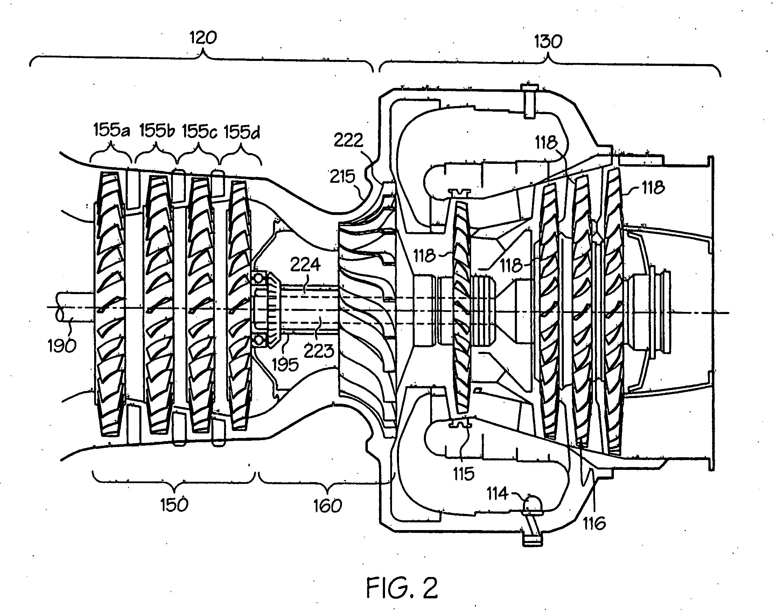

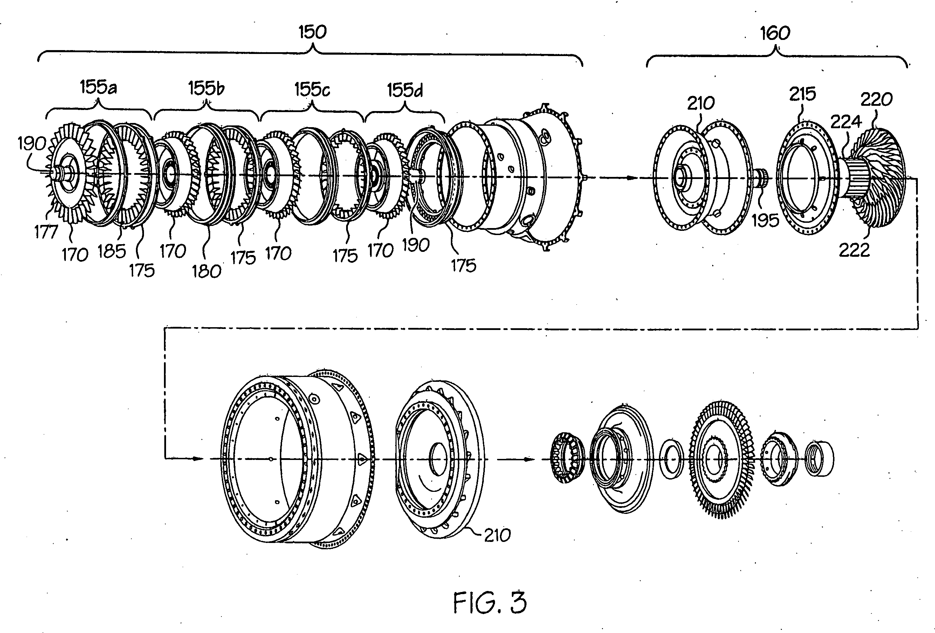

With reference now to FIGS. 2 and 3, a more detailed description of the compressor module 120 will be provided. As shown, the compressor module 120 includes a low pressure section 150 and a high pressure section 160. The low pressure section 150 includes four stages 155a-d, each of which includes four rotors 170 and four stators 175. Each of the rotors 170 has a plurality of blades 177 and is surrounded by a shroud 180. As shown more clearly in FIGS. 2 and 3, each of the rotors 170 is rotationally mounted on a low pressure shaft 190, which is driven by the low pressure turbine 116. As the rotors 170 rotate, the blades 177 force air through each of the stators 175 in subsequent sections. Each stator 175 also includes a plurality of vanes 185. As the air from the rotors 170 travels across the vanes 185, it is forced to travel at a substantially optimum angle to the next stage, thereby increasing the air pressure as the air travels from stage to stage.

The high pressure section 160 includes a high pressure diffuser case 210, a shroud 215, and a high pressure impeller 220. The high pressure diffuser case 210 couples the low pressure section 150 to the high pressure section 160 and directs the air exhausted from the fourth stage 155d of the low pressure section 150 at an appropriate angle into the high pressure impeller 220. The shroud 215 is mounted to the diffuser case 210 and surrounds a portion of the high pressure impeller 220.

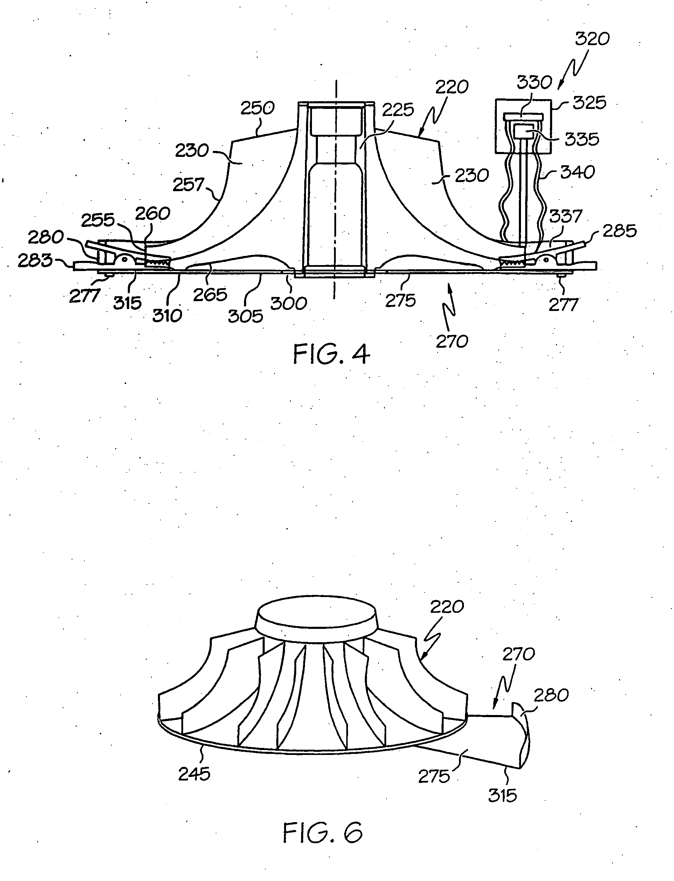

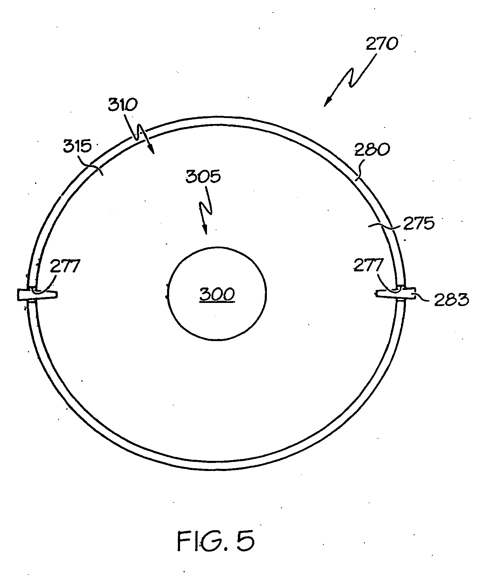

Turning now to FIG. 4, the impeller 220 is shown and includes a plurality of vanes 230 (also shown in FIG. 2) that are equally spaced apart around a shaft 225. The vanes 230 flare radially and axially outwardly from the shaft 225 as well. Each vane 230 includes a radially extending top edge 250, an axially extending outer peripheral edge 255, and a corner 260 disposed therebetween. Additionally, the vane 230 includes a bottom edge 265 that may (shown in FIG. 5) or may not (shown in FIG. 4) be coupled to a disk 245. Also shown in FIG. 4, a side edge 257 extends between the top edge 250 and the outer peripheral edge 255. Although the side edge 257 is shown as being curved, it will be appreciated that it may alternatively be straight. Moreover, in other embodiments, the side edge 257 may be omitted and the top edge 250 may alternatively extend to the outer peripheral edge 255 to form the corner 260.

As mentioned briefly above, the impeller 220 may need to undergo a weld repair process. In such case, a dam 270, shown mounted to the impeller 220 in FIG. 4, is used. The dam 270 is configured to maintain gases that are used to bathe the impeller 220 in contact therewith during a welding process. In particular, when the dam 270 is mounted to the impeller 220, it allows the gases to localize around desired portions of the impeller 220 such as the outer peripheral edge 255 and corner 260. The dam 270 may be made of any one of numerous robust materials, such as, for example, aluminum, and includes a skirt 275, a flange 280, and one or more fasteners 283, that may each have any one of several configurations.

With reference to both FIGs. 4 and 5, in one exemplary embodiment, the skirt 275 is annular and includes an opening 300, an inner section 305, and an outer section 310. The opening 300 is formed generally in the middle of the skirt 275 and may be configured to receive a portion of the shaft 195 therein. The inner section 305 is proximate the opening 300 and serves as a platform on which the impeller 220 is to be disposed. The outer section 310 includes an outer peripheral portion 315 that is configured to extend beyond the outer peripheral edge 255 of the impeller 220 when the skirt 275 is mounted thereto.

The flange 280 cooperates with the skirt 275 to pool the gases around the impeller outer peripheral edge 255. In this regard, the flange 280 is formed on the outer peripheral portion 315 of the skirt 275 and extends substantially perpendicular therefrom. Preferably, the flange 280 has a length that is equal to or greater than an axial length from the vane bottom edge 265 to the vane corner 260; however, it will be appreciated that the flange 280 may have any other suitable length. The flange 280 includes one or more notches 285 formed therein through which one or more of the fasteners 283 extend.

The fasteners 283 are coupled to the skirt 275 and are configured to rotate relative thereto. It will be appreciated that the fasteners 283 may be any one of numerous conventional devices suitable for coupling the dam 270 to the impeller 220. For example, as shown in FIG. 4, one or both of the fasteners 283 may be an alligator clip that clips to the impeller disk 245, or alternatively, other portions of the impeller 220 such as a vane 230. Although the fasteners 283 are shown coupled to the skirt inner section 305, it will be appreciated that the fasteners 283 may alternatively be coupled to the outer section 310 and may extend through the notches 285 formed in the flange 280. Although the fasteners 283 are shown coupled to the skirt 275 via a screw 277, any other conventional rotatable coupling mechanism may be used. Moreover, although two fasteners 283 are shown, fewer or more may alternatively be incorporated.

In an example not covered by the present invention and shown in FIG. 5, the skirt 275 is an arc segment. Here, the flange 280 extends around the outer peripheral portion 315 of the arc segment. Additionally, a fastener 283 may or may not be included.

Returning to FIG. 4, during a weld process, the dam 270 is placed beneath the impeller 220 and a welding apparatus 320 is used that includes a shield cup 325, a gas supply source 330, and a heat source 335. The shield cup 325 partially directs gas 340 from the gas supply source 330 towards the impeller 220, which then travels between the impeller vanes 230 and pools at a space 337 created between the impeller 220 and dam 270. After the impeller 220 is suitably bathed in gas, the heat source 335 supplies direct heat 350 to a selected portion of the impeller 220, such as, for example, the vane corner 260. The heat source 335 may be any source of concentrated energy, such as a laser generator.

The dam 270 according to the invention reduces the amount of noble gas used in a welding process and allows the impeller 220 to be substantially bathed in gas. Consequently, the likelihood of the filler material becoming oxidized is decreased. As a result, the repaired impeller 220 is structurally robust, and frequency of repair is decreased.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the scope thereof. Therefore, it is intended that the invention not be limited to the particular embodiment disclosed as the best mode contemplated for carrying out this invention, but that the invention will include all embodiments falling within the scope of the appended claims.

## Claims

1. A dam (270) for localizing gas around an outer periphery of an impeller (220), the dam (270) including an opening (300) configured to receive a portion of the shaft (195) of the impeller (220), and a flange (280), **characterised by** comprising:
a flat annular skirt (275) including the opening (300) and the flange (280) an inner section (305) and an outer section (310), an outer peripheral edge (315), the inner section (305) and the outer section (310) configured to be placed under the impeller (220), and the opening formed generally in the middle of the skirt (275);
the flange (280) extending substantially perpendicular from the outer peripheral edge (315) and including at least a notch (277) therein; and at least a fastener (283) extending through each notch (277) and coupled to the skirt (275) and configured to couple the dam (270) to the impeller (220).

2. The dam (270) of claim 1 in combination with an impeller (220), wherein:
the impeller (220) includes a radially extending vane (230) having a bottom edge (265), a top edge (250), and a side edge (257) therebetween, the top edge (250) and side edge (257) forming a corner (260), the vane (230) including an axial length between the bottom edge (265) and the corner (260); and
the flange (280) has a length that is substantially equal to the axial length between the impeller bottom edge (265) and the corner (260).

3. The dam (270) of claim 1, wherein a portion of the fastener (283) extends radially away from the skirt outer peripheral edge (315).

4. The dam (270) of claim 1, wherein the fastener (283) is an alligator clip.

## Patentansprüche

1. Schirm (270) zum Lokalisieren von Gas um eine äußere Peripherie eines Laufrads (220) herum, wobei der Schirm (270) eine Öffnung (300), die zur Aufnahme eines Teils der Welle (195) des Laufrads (220) konfiguriert ist, und einen Flansch (280) enthält, **dadurch gekennzeichnet, dass** der Schirm Folgendes umfasst:
eine flache ringförmige Schürze (275), die die Öffnung (300) und den Flansch (280), einen inneren Abschnitt (305), einen äußeren Abschnitt (310) und
einen Außenumfangsrand (315) enthält, wobei der innere Abschnitt (305) und der äußere Abschnitt (310) zur Anordnung unter dem Laufrad (220) konfiguriert sind und die Öffnung allgemein in der Mitte der Schürze (275) ausgebildet ist;
wobei sich der Flansch (280) im Wesentlichen senkrecht von dem Außenumfangsrand (315) erstreckt und mindestens eine Kerbe (277) darin aufweist; und
mindestens ein Befestigungsmittel (283), das sich durch jede Kerbe (277) erstreckt, mit der Schürze (275) verbunden und zur Verbindung des Schirms (270) mit dem Laufrad (220) konfiguriert ist.

2. Schirm (270) nach Anspruch 1 in Kombination mit einem Laufrad (220), wobei:
das Laufrad (220) eine sich radial erstreckende Schaufel (230) aufweist, die einen unteren Rand (265), einen oberen Rand (250) und einen Seitenrand (257) dazwischen aufweist, wobei der obere Rand (250) und der Seitenrand (257) eine Ecke (260) bilden, wobei die Schaufel (230) eine axiale Länge zwischen dem unteren Rand (265) und der Ecke (260) aufweist; und
der Flansch (280) eine Länge aufweist, die im Wesentlichen gleich der axialen Länge zwischen dem unteren Rand (265) des Laufrads und der Ecke (260) ist.

3. Schirm (270) nach Anspruch 1, wobei sich ein Teil des Befestigungsmittels (283) radial von dem Außenumfangsrad (315) der Schürze weg erstreckt.

4. Schirm (270) nach Anspruch 1, wobei es sich bei dem Befestigungsmittel (283) um eine Krokodilklemme handelt.

## Revendications

1. Barrière (270) pour circonscrire du gaz autour d'une circonférence extérieure d'une roue à aubes (220), la barrière (270) comprenant une ouverture (300) configurée pour accueillir une partie de l'arbre (195) de la roue à aubes (220) et un flanc (280) et **caractérisée en ce qu'**elle comprend :
une jupe annulaire plate (275) comprenant l'ouverture (300) et le flanc (280), une section intérieure (305) et une section extérieure (310), un bord périphérique extérieur (315), la section intérieure (305) et la section extérieure (310) étant configurées pour être placées sous la roue à aubes (220) et l'ouverture étant généralement pratiquée au milieu de la jupe (275) ;
le flanc (280) s'étendant sensiblement perpendiculairement à partir du bord périphérique extérieur (315) et comprenant au moins une encoche (277) ; et
au moins un élément de fixation (283) passant à travers chaque encoche (277), étant fixé sur la jupe (275) et configuré pour assembler la barrière (270) à la roue à aubes (220).

2. Barrière (270) selon la revendication 1, en combinaison avec la roue à aubes (220), dans laquelle :
la roue à aubes (220) comprend une aube (230) s'étendant radialement et comportant un bord inférieur (265), un bord supérieur (250) et un bord latéral (257) entre les deux, le bord supérieur (250) et le bord latéral (257) formant une arête (260), l'aube (230) comprenant une longueur axiale entre le bord inférieur (265) et l'arête (260) ; et
le flanc (280) a une longeur qui est sensiblement égale à la longueur axiale entre le bord inférieur (265) de la roue à aubes et l'arête (260).

3. Barrière (270) selon la revendication 1, dans laquelle une partie de l'élément de fixation (283) s'étend radialement à partir du bord périphérique extérieur (315) de la jupe.

4. Barrière (270) selon la revendication 1, dans laquelle l'élément de fixation (283) est une pince crocodile.
